# EUROPÄISCHE PATENTSCHRIFT

(11) **EP 3 290 742 B1**
(45) Veröffentlichungstag und Bekanntmachung des Hinweises auf die Patenterteilung: **17.07.2019**
(21) Anmeldenummer: 16186086.1
(22) Anmeldetag: 29.08.2016
(51) Int. Cl.: F16F 15/121, F16F 15/133, F16F 1/06, F16F 1/12

(54) **DREHSCHWINGUNGSDÄMPFER**
TORSIONAL VIBRATION DAMPER
AMORTISSEUR DE VIBRATIONS DE TORSIONS

(43) Veröffentlichungstag der Anmeldung: 07.03.2018
(73) Patentinhaber: Federntechnik Knörzer GmbH, 72793 Pfullingen (DE)
(72) Erfinder: Knörzer, Thomas, 72793 Pfullingen (DE)
(74) Vertreter: Sebastian, Jens

(56) Entgegenhaltungen:
- EP-A1- 2 966 315
- EP-A1- 3 056 757
- DE-B3-102005 042 037
- US-A1- 2012 102 936

## Beschreibung

Die Erfindung betrifft einen Drehschwingungsdämpfer mit den Merkmalen des Oberbegriffs des Anspruchs 1. Drehschwingungsdämpfer werden verwendet, um eine Drehschwingung, die einer Drehung überlagert ist, zu dämpfen. Ein Anwendungsfall ist die Dämpfung von Drehschwingungen eines Verbrennungsmotors, beispielsweise Otto- oder Dieselmotors.

Aus der europäischen Patentanmeldung EP 2 966 315 A1 ist ein Drehschwingungsdämpfer mit zwei gleichachsig angeordneten und um ihre gemeinsame Achse als Drehachse drehbaren und um die Drehachse gegeneinander verdrehbare Elementen bekannt, von denen eines als Antrieb und das andere als Abtrieb dient. Zwischen den beiden gegeneinander verdrehbare Elementen sind auf einem gedachten, zur Drehachse koaxialen Kreis Schenkelfedern angeordnet, deren Federschenkel an den beiden gegeneinander verdrehbare Elementen des Drehschwingungsdämpfer angreifen und sie drehelastisch an einander abstützen. Mit drehelastisch ist gemeint, dass die Schenkelfedern bei einer Verdrehung der beiden drehbaren Elemente gegeneinander gespannt werden und die beiden Elemente federelastisch entgegen der Verdrehung beaufschlagen. Die Schenkelfedern weisen wendelförmige Federwicklungen auf, von denen Federschenkel tangential abstehen.

Aufgabe der Erfindung ist, einen Drehschwingungsdämpfer der vorstehend erläuterten Art weiter zu entwickeln.

Diese Aufgabe wird durch einen Drehschwingungsdämpfer mit den Merkmalen des Anspruchs 1 gelöst. Der erfindungsgemäße Drehschwingungsdämpfer mit den Merkmalen des Anspruchs 1 weist zwei um eine gleiche Drehachse drehbare und gegeneinander verdrehbare Elemente und mindestens ein Federelement auf, das die beiden drehbaren Elemente elastisch gegen eine Verdrehung gegeneinander abstützt. Die elastische Abstützung gegen eine Verdrehung kann auch als drehelastische Abstützung der beiden drehbaren Elemente gegeneinander aufgefasst werden. Das mindestens eine Federelement stützt sich an einem der beiden drehbaren Elemente in einer Umfangsrichtung und an dem anderen drehbaren Element in einer entgegengesetzten Umfangsrichtung oder an einem oder beiden drehbaren Elementen in beiden Umfangsrichtungen ab. Das mindestens eine Federelement stützt sich so an den beiden drehbaren Elementen des Drehschwingungsdämpfers ab, dass es zur Übertragung eines Moments in mindestens einer Drehrichtung und vorzugsweise in beiden Drehrichtungen eine Kraft mit radialem Abstand von der Drehachse in einer oder in beiden Umfangsrichtungen zwischen den beiden drehbaren Elementen überträgt.

Die beiden drehbaren Elemente können beispielsweise in Richtung der Drehachse gesehen hintereinander angeordnet sein. Möglich ist beispielsweise auch eine radiale Anordnung beispielsweise einer drehbaren Kreisscheibe als einem Element und einem die Kreisscheibe konzentrisch umschließenden Kreisring als anderem Element. Die Aufzählung dient einer Veranschaulichung verschiedener Möglichkeiten der Anordnung der beiden drehbaren Elemente des Drehschwingungsdämpfer und ist nicht abschließend.

Das mindestens eine Federelement, das die beiden drehbaren Elemente des Drehschwingungsdämpfers elastisch gegen eine Verdrehung gegeneinander abstützt, weist erfindungsgemäß zwei Federwicklungen auf, von denen Federschenkel abstehen. Die beiden Federwicklungen sind in ihren axialen Richtungen gesehen hintereinander, insbesondere gleichachsig hintereinander angeordnet.

Insbesondere sind die Federwicklungen Wendeln. Die Federschenkel stehen insbesondere von Enden der beiden Federwicklungen in oder etwa in Radialebenen der Federwicklungen ab. Ein Federschenkel einer der beiden Federwicklungen ist mit einem Federschenkel der anderen Federwicklung verbunden, beispielsweise ist das ganze Federelement aus einem Federdraht gebogen und/oder gewickelt, so dass die beiden verbundenen Federschenkel einstückig ineinander übergehen. Das Federelement kann auch als doppelte Schenkelfeder aufgefasst werden. Die beiden verbundenen Federschenkel greifen an einem und die beiden anderen Federschenkel greifen an dem anderen der beiden drehbaren Elemente des Drehschwingungsdämpfers an.

Ein Vorteil der Erfindung ist, dass das Federelement eine große Federkraft bei kleinem Bauraum ermöglicht, weil es sozusagen zwei Schenkelfedern vereint. Ein weiterer Vorteil der Erfindung ist, dass sich das Federelement - beispielsweise durch eine symmetrische Ausbildung zu einer Radialmittelebene - so ausbilden lässt, dass ein Zusammendrücken oder Auseinanderziehen der Federschenkel kein Moment auf das Federelement verursacht, so dass das Federelement nicht gegen Schwenken (und auch sonst nicht) gehalten werden muss. Außerdem erhöhen die beiden Federwicklungen eine Stabilität im Vergleich mit einer Federwicklung, die axial so lang ist wie die beiden Federwicklungen zusammen sind. Die Gefahr eines Knickens oder sonstigen Instabilität ist verringert.

Eine Ausgestaltung der Erfindung sieht vor, dass die Federschenkel über eine Mantelfläche der Federwicklungen überstehen, beispielsweise stehen die Federschenkel tangential von den Federwicklungen an Enden der Federwicklungen ab.

Eine Ausgestaltung der Erfindung sieht vor, dass Federschenkel an einander fernen Enden der Federwicklungen miteinander verbunden sind. Dadurch ergibt sich beispielsweise ein Bügel, der sich gut zu einer Abstützung eignet.

Eine Weiterbildung der Erfindung sieht vor, dass die beiden anderen Federschenkel zu Winkeln oder Bügeln in einer Tangentialebene der Federwicklungen geformt sind. Allgemein ausgedrückt weisen die beiden anderen Federschenkel einen zweidimensionalen Verlauf in einer Tangentialebene der Federwicklungen auf. Dadurch wird auch ihre Abstützung in achsparalleler Richtung zu den Federwicklungen breiter und damit verbessert.

Eine Ausgestaltung der Erfindung sieht einen mehreckigen, ovalen oder elliptischen Windungs- und Schenkelquerschnitt des Federelements vor. Möglich ist beispielsweise, einander zugewandte Seiten von Windungen der Federwicklungen abgeflacht und parallel zueinander vorzusehen.

Es ist möglich, ein Federelement zentral am oder im Drehschwingungsdämpfer anzuordnen, das heißt so, dass die Federwicklungen koaxial zur Drehachse des Drehschwingungsdämpfers sind. Die Federschenkel stehen nach außen ab und greifen mit Abstand von der Drehachse an den beiden drehbaren Elementen des Drehschwingungsdämpfers an. Möglich ist auch, zwei Federelemente zentral am oder im Drehschwingungsdämpfer anzuordnen, das heißt mit ihren Federwicklungen koaxial zur Drehachse des Drehschwingungsdämpfers, wobei die Federwicklungen oder Windungen der Federwicklungen kammartig bzw. wie eine doppelgängige Federwicklung zwischen einander greifen.

Eine Ausgestaltung der Erfindung sieht mehrere Federelemente vor, deren Federwicklungen mit Abstand von der Drehachse des Drehschwingungsdämpfer angeordnet sind. Eine solche exzentrische Anordnung von Federelementen erhöht eine Momentenübertragung zwischen den beiden drehbaren Elementen des Drehschwingungsdämpfers. Vorzugsweise greifen die Federschenkel umfangsnah an den beiden drehbaren Elementen des Drehschwingungsdämpfers an. Umfangsnah bedeutet ein Angreifen der Federschenkel des oder der Federelemente näher an einem Umfang der drehbaren Elemente als an der Drehachse und vorzugsweise mit einem Abstand von mindestens 70 %, 75 %, 80 %, 90 % oder 95 % eines Abstands des Umfangs der drehbaren Elemente von der Drehachse.

In bevorzugter Ausgestaltung der Erfindung ist das mindestens eine Federelement fliegend gelagert, d. h. es gibt keinen in die Federwicklungen eingreifenden Dorn oder die Federwicklungen außen haltende Halterungen, sondern es sind nur die Federschenkel des Federelements an den beiden drehbaren Elementen des Drehschwingungsdämpfers abgestützt bzw. gehalten. Sicherheitseinrichtungen in oder außerhalb der Federwicklungen, die das Federelement im Falle eines Federbruchs oder eines Aushängens der Federschenkel halten, können vorhanden sein. Allerdings sind solche Sicherheitseinrichtungen so gestaltet und angeordnet, dass sie das Federelement in einem normalen Betrieb des Drehschwingungsdämpfers, also auch bei einem elastischen Verformen bzw. Spannen, nicht berühren. Erforderlich kann eine Halterung der Schenkelfedern gegen Fliehkraft sein, die das Federelement jedenfalls bei hohe Drehzahl berührt.

Vorzugsweise wird das mindestens eine Federelement unabhängig von einer Richtung einer Verdrehung der beiden drehbaren Elemente des Drehschwingungsdämpfers immer in derselben Richtung gespannt, und zwar vorzugsweise so, dass die Federschenkel zueinander bewegt und/oder die Federwicklungen im Sinne einer Verkleinerung ihres Durchmessers verformt werden. Eine Wechselbelastung des Federelements mit entgegengesetzten Verformungsrichtungen wird vermieden, das Federelement wird schwellend immer in derselben Richtung belastet, was seine Dauerhaltbarkeit verlängert. Dazu sieht eine Ausgestaltung der Erfindung vor, dass jedes der beiden drehbaren Elemente des Drehschwingungsdämpfers für jeden Federschenkel des Federelements ein Widerlager aufweist, das die Federschenkel an einander zugewandten oder einander abgewandten Seiten abstützt. Bei einer Verdrehung der drehbaren Elemente in einer Drehrichtung gegeneinander stützen sich die verbundenen Federschenkel des oder der Federelemente an dem oder den Widerlagern eines der beiden drehbaren Elemente und die anderen Federschenkel an dem oder den Widerlagern des anderen der beiden drehbaren Elemente ab. Bei einer Verdrehung der beiden drehbaren Elemente in einer entgegengesetzten Drehrichtung gegeneinander stützen sich die Federschenkel des oder der Federelemente an dem oder den Widerlagern des jeweils anderen drehbaren Elements wie bei der Verdrehung in der einen Drehrichtung ab. Bei der Verdrehung der beiden drehbaren Elemente in der entgegengesetzten Drehrichtung gegeneinander stützen sich also die verbundenen Federschenkel an dem oder den Widerlagern des anderen drehbaren Elements und die anderen Federschenkel an dem oder den Widerlagern des einen drehbaren Elements ab. Dadurch werden die Federschenkel der Federelemente unabhängig von der Richtung, in der sich die drehbaren Elemente gegeneinander verdrehen, immer zusammen gedrückt oder immer auseinander gezogen und nie bei einer Verdrehung der drehbaren Elemente in einer Richtung gegeneinander zusammengedrückt und bei entgegengesetzter Verdrehung auseinander gezogen. Die drehbaren Elemente können jeweils ein Widerlager für die beiden verbundenen Federschenkel und ein Widerlager für die beiden anderen Federschenkel aufweisen, getrennte Widerlager für die verbundenen Federschenkel und/oder getrennte Widerlager für die anderen Federschenkel sind zwar möglich aber nicht notwendig.

Die Erfindung wird nachfolgend anhand eines in der Zeichnung dargestellten Ausführungsbeispiels näher erläutert. Es zeigen:
- Figur 1: eine Stirnansicht eines geöffneten Drehschwingungsdämpfers gemäß der Erfindung;
- Figur 2: ein Federelement des Drehschwingungsdämpfers aus Figur 1 in einer Umfangsrichtung des Drehschwingungsdämpfers gesehen, und
- Figur 3: das Federelement des Drehschwingungsdämpfers aus Figur 1 in einer achsparallelen Richtung des Drehschwingungsdämpfers gesehen.

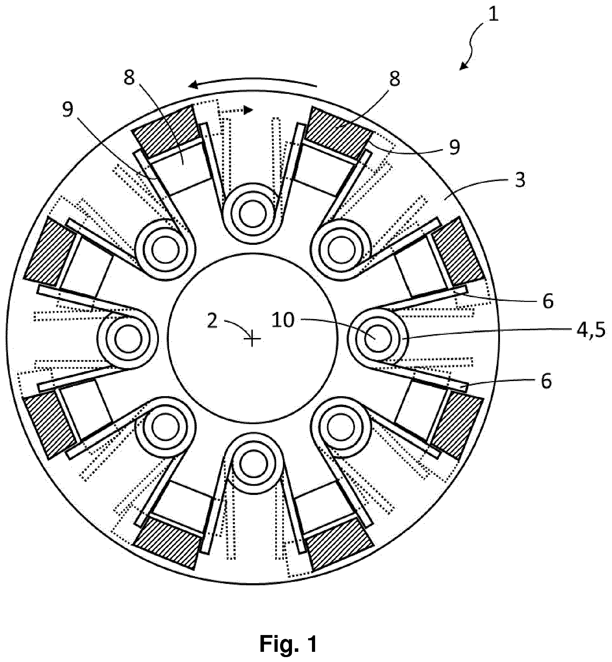

Der in Figur 1 dargestellte, erfindungsgemäße Drehschwingungsdämpfer 1 weist zwei gleiche, gleichachsig in Achsrichtung neben- bzw. hintereinander angeordnete und um ihre Achsen als Drehachse 2 drehbare Kreislochscheiben als drehbare Elemente 3 auf. Die beiden drehbaren Elemente 3 sind wie gesagt um die Drehachse 2 drehbar und um die Drehachse 2 gegeneinander verdrehbar. Eines der beiden drehbaren Elemente 3 dient einem Antrieb und das andere einem Abtrieb. Es ist eine Verwendung des Drehschwingungsdämpfers 1 in einem Kraftfahrzeug vorgesehen, wo er zwischen einer Brennkraftmaschine und einem Achsantrieb vor oder nach einem Getriebe und vor oder nach einer Kupplung angeordnet wird. Eines der beiden drehbaren Elemente 3 wird von der Brennkraftmaschine unmittelbar oder mittelbar über ein Getriebe drehend angetrieben und das andere drehbare Element 3 treibt mittelbar über das Getriebe oder unmittelbar einen Achsantrieb an. Um Konstruktion und Aufbau des Drehschwingungsdämpfers 1 zu zeigen ist der Drehschwingungsdämpfers 1 offen gezeichnet, das heißt ein dem Betrachter zugewandtes der beiden drehbaren Elemente 3 ist in Figur 1 weggelassen.

Zwischen den beiden drehbaren Elementen 3 sind Federelemente 4 angeordnet, die ein Moment eines der beiden drehbaren Elemente 3 als in Umfangsrichtung mit Abstand von der Drehachse 2 wirkende Kräfte auf das andere drehbare Element 3 übertragen. Die Federelemente 4 verbinden die beiden drehbaren Elemente 3 drehelastisch miteinander. Die Federelemente 4 weisen jeweils zwei wendelförmige Federwicklungen 5 mit gleichem Durchmesser auf, die gleichachsig hintereinander angeordnet sind. Im Ausführungsbeispiel sind die beiden Federwicklungen 5 unmittelbar ohne oder mit wenig Abstand von nicht mehr als einer Drahtdicke eines Federdrahts der Federelemente 4 angeordnet und entgegengesetzt gewickelt, das heißt eine Federwicklung 5 ist rechtsgängig und die andere Federwicklung 5 ist linksgängig. Ebenfalls im Ausführungsbeispiel sind die wendelförmige Federwicklungen 5 zylindrisch. Die beiden drehbaren Elemente 3 weisen einen axialen Abstand voneinander auf, der einer axialen Länge der Federwicklungen 5 der Federelemente 4 entspricht.

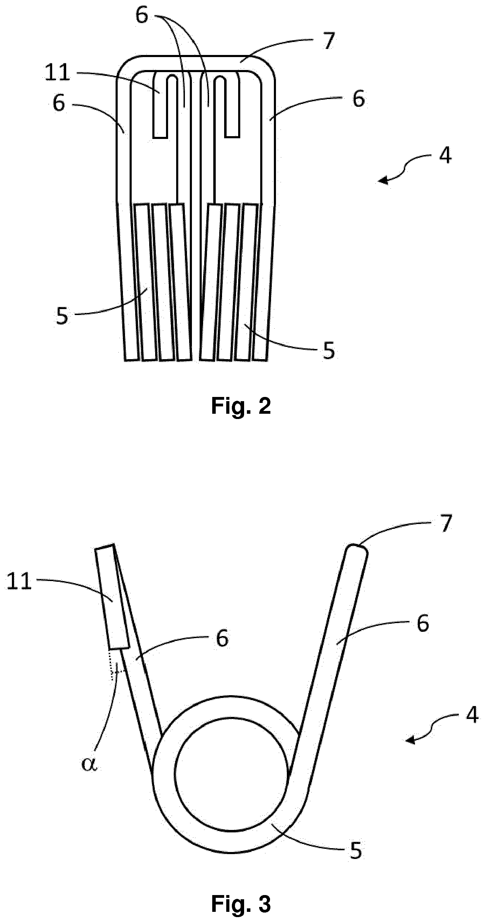

An jeweils beiden Enden der Federwicklungen 5 stehen Federschenkel 6 der Federelemente 4 tangential ab. Es weist somit jedes Federelement 4 vier Federschenkel 6 auf. In Stirnansicht, das heißt mit axialer Blickrichtung, sind - wie in Figur 2 zu sehen - jeweils zwei Federschenkel 6 deckungsgleich und stehen V-förmig von den Federwicklungen 5 ab. Die Federschenkel 6 an einander zugewandten Enden der Federwicklungen 5 liegen aneinander an und die Federschenkel 6 an einander fernen Enden der Federwicklungen 5 gehen einstückig ineinander über, wobei sie einen U-förmigen Bügel 7 bilden. Möglich ist auch, die beiden Federschenkel 6 an den einander zugewandten Enden der Federwicklungen 5 miteinander zu verbinden (nicht dargestellt). Die Federelemente 4 sind aus einem Federdraht gebogen bzw. gewickelt, das heißt die beiden Federwicklungen 5 und die Federschenkel 6 sind einstückig miteinander. Im Ausführungsbeispiel weist der Federdraht einen quadratischen Querschnitt auf. Wegen der beiden gleichachsig hintereinander angeordneten Federwicklungen 5, von denen in einer Mitte zwischen den beiden Federwicklungen 5 zwei Federschenkel 6 und an Enden zwei weitere Federschenkel 6 tangential abstehen, können die Federelemente 4 auch als doppelte Schenkelfedern aufgefasst werden.

Die beiden Federschenkel 6 in der Mitte der Federelemente 4 sind zu U-förmigen Bügeln 11 (siehe Figur 2) in einer Tangentialebene der Federwicklungen 5 gebogen. Dadurch ist eine Abstützung dieser Federschenkel 6 in achsparalleler Richtung der Federwicklungen 5 verbreitert und damit verbessert. Im Ausführungsbeispiel befinden sich die U-förmigen Bügel 11 nicht exakt in einer Tangentialebene der Federwicklungen 5, sondern sind demgegenüber so verbogen, dass freie Enden der U-förmigen Bügel 11 in einem Winkel α von etwa 1°, 2°, 3°, bis zu etwa 5° oder bis zu etwa 10° aus der Tangentialebene der Federwicklungen 5 nach außen stehen. Nach außen bedeutet weg von den verbundenen Federschenkeln 6. Das verbessert eine Anlage an Widerlagern 8 der drehbaren Elemente 3.

Die Federwicklungen 5 sind auf einem gedachten, zur Drehachse 2 der drehbaren Elemente 3 und des Drehschwingungsdämpfers 1 konzentrischen Kreis angeordnet und die Federschenkel 6 stehen schräg, ungefähr radial nach außen. Zwischen den Federschenkeln 6 benachbarter Federelemente 4 weisen beide drehbaren Elemente 3 Widerlager 8 auf, die jeweils den Abstand zwischen den drehbaren Elementen 3 überbrücken und die an einem der beiden drehbaren Elemente 3 außen am Umfang und am anderen drehbaren Element 3 radial innerhalb der Widerlager 8 des einen drehbaren Elements 3 angeordnet sind. Die Widerlager 8 weisen trapezförmige Querschnitte auf, ihre in Umfangsrichtung weisenden Anlageflächen 9 verlaufen in gleichen Richtungen wie die Federschenkel 6. Die Anlageflächen 9 können auch ballig sein, damit die Federschenkel 6 bei einem Spannen der Federelemente 4 auf den Anlageflächen 9 wälzen können. Es liegen Außenseiten der Federschenkel 6 benachbarter Federelemente 4 an den Widerlagern 8 der beiden drehbaren Elemente 3 an. Die Außenseiten der Federschenkel 6 eines Federelements 4 sind einander abgewandt, die Außenseiten einander naher Federschenkel 6 zweier benachbarter Federelemente 4 sind dementsprechend einander zugewandt und liegen an den zwischen ihnen befindlichen Widerlagern 8 beider drehbarer Elemente 3 an.

Wenn die beiden drehbaren Elemente 3 des Drehschwingungsdämpfers 1 nicht gegeneinander verdreht sind, liegen die Federschenkel 6 jeweils an einer Anlagefläche 9 eines Widerlagers 8 eines der beiden drehbaren Elemente 3 und an einer Anlagefläche 9 eines Widerlagers 8 des anderen drehbaren Elements 3 an. Die Widerlager 8 der beiden drehbaren Elemente 3 sind wie bereits gesagt radial versetzt zueinander angeordnet. Die Federelemente 4 können vorgespannt und die Federschenkel 6 mit Vorspannung an den Anlageflächen 9 der Widerlager 8 anliegen. Bei einer Verdrehung der drehbaren Elemente 3 gegeneinander bewegen sich die Widerlager 8 der beiden drehbaren Elemente 3 in einer Umfangsrichtung gegeneinander, wie es in Figur 1 mit Strichlinien für eine Drehrichtung dargestellt ist. Bei einer Verdrehung der drehbaren Elemente 3 in entgegengesetzter Drehrichtung gegeneinander bewegen sich die Widerlager 8 der beiden drehbaren Elemente 3 in einer entgegengesetzten Umfangsrichtung gegeneinander. In beiden Drehrichtungen werden die Federschenkel 6 der Federelemente 4 zusammengedrückt, die Federelemente 4 werden unabhängig von einer Richtung der Verdrehung der beiden drehbaren Elemente 3 gegeneinander immer in derselben Richtung gespannt, das heißt die Federelemente 4 werden schwellend immer in derselben Richtung und nicht wechselnd in entgegengesetzten Richtungen gespannt.

Eines der beiden drehbaren Elemente 3 weist Zapfen 10 auf, die sich in den Federwicklungen 5 der Federelemente 4 befinden. Die Zapfen 10 weisen kleinere Durchmesser als Innendurchmesser der Federwicklungen 5 auf, so dass die Federwicklungen 5 nicht an den Zapfen 10 anliegen, auch nicht bei gespannten Federelementen 4 durch gegeneinander verdrehte drehbare Elemente 3. Die Zapfen 10 dienen lediglich der Sicherheit, sie verhindern, dass sich die Federelemente 4 vom Drehschwingungsdämpfer 1 lösen können.

Die Federelemente 4 sind fliegend gelagert, das heißt es liegen ausschließlich die Federschenkel 6 an den Anlageflächen 9 der Widerlager 8 und eventuell die Federelemente 4 leicht an den drehbaren Elementen 3 an. Ansonsten sind die Federelemente 4 und insbesondere die Federwicklungen 5 nicht gehalten.

Eine Verdrehung der drehbaren Elemente 3 gegeneinander spannt wie gesagt die Federelemente 4, die dadurch ihrerseits die drehbaren Elemente 3 elastisch entgegen ihrer Verdrehung beaufschlagen. Die Federelemente 4 verbinden die drehbaren und gegeneinander verdrehbare Elemente 3 drehelastisch miteinander. Bei einem Drehantrieb mit überlagerter Drehschwingung - beispielsweise mit einem Verbrennungsmotor - dämpft der Drehschwingungsdämpfer 1 die Drehschwingung.

Anstelle der gezeichneten dezentralen Anordnung der Federelemente 4 mit ihren Federwicklungen 5 auf einem gedachten, zur Drehachse 2 konzentrischen Kreis, kann auch ein Federelement 4 zentral, das heißt mit seinen Federwicklungen 5 koaxial zur Drehachse 2 zwischen den drehbaren Elementen eines Drehschwingungsdämpfers angeordnet werden (nicht dargestellt). Die tangential von den Federwicklungen abstehenden Federschenkel liegen wie für die dezentrale Anordnung oben beschrieben an Widerlagern der drehbaren Elemente an. Die Federschenkel können wie gezeichnet V-förmig oder beispielsweise auch in entgegengesetzten Richtungen von den Federwicklungen abstehen. Denkbar ist auch eine zentrale Anordnung von zwei Federelementen, deren in diesem Fall insgesamt vier Federwicklungen koaxial zur Drehachse des Drehschwingungsdämpfers angeordnet sind (nicht dargestellt). In diesem Fall können Windungen der verschiedenen Federwicklungen wie bei einer zweigängig gewickelten Schraubenfeder ineinander greifen oder die Federwicklungen der beiden Federelemente abwechselnd axial hintereinander angeordnet oder die beiden Federwicklungen eines Federelements innen und die beiden Federwicklungen des anderen Federelements gleichachsig außen angeordnet sein.

## Patentansprüche

1. Drehschwingungsdämpfer, mit zwei um eine gleiche Drehachse (2) drehbaren und gegeneinander verdrehbaren Elementen (8) und mit mindestens einem Federelement (4), das die beiden Elemente (8) elastisch gegen eine Verdrehung gegeneinander abstützt, **dadurch gekennzeichnet, dass** das Federelement (4) zwei hintereinander angeordnete Federwicklungen (5) aufweist, von denen Federschenkel (6) abstehen, wobei zwei Federschenkel (6) der beiden Federwicklungen (5) verbunden sind und an einem der verdrehbaren Elemente (3) des Drehschwingungsdämpfers (1) angreifen und zwei andere Federschenkel (6) der beiden Federwicklungen (5) an dem anderen verdrehbaren Element (3) angreifen.

2. Drehschwingungsdämpfer nach Anspruch 1, **dadurch gekennzeichnet, dass** die Federschenkel (6) über eine Mantelfäche der Federwicklungen (5) überstehen.

3. Drehschwingungsdämpfer nach Anspruch 1 oder 2, **dadurch gekennzeichnet, dass** Federschenkel (6) an einander fernen Enden der Federwicklungen (5) miteinander verbunden sind.

4. Drehschwingungsdämpfer nach einem der Ansprüche 1 bis 3, **dadurch gekennzeichnet, dass** die beiden anderen Federschenkel (6) einen zweidimensionalen Verlauf in einer Tangentialebene der Federwicklungen (5) aufweisen.

5. Drehschwingungsdämpfer nach einem der vorhergehenden Ansprüche, **dadurch gekennzeichnet, dass** die beiden Federwicklungen (5) entgegengesetzt gewickelt sind.

6. Drehschwingungsdämpfer nach einem der vorhergehenden Ansprüche, **dadurch gekennzeichnet, dass** das Federelement (4) einen mehreckigen, ovalen oder elliptischen Windungs- und Schenkelquerschnitt aufweist.

7. Drehschwingungsdämpfer nach einem der vorhergehenden Ansprüche, **dadurch gekennzeichnet, dass** der Drehschwingungsdämpfer (1) mehrere Federelemente (4) aufweist, deren Federwicklungen (5) außerhalb der Drehachse (2) des Drehschwingungsdämpfers (1) angeordnet sind.

8. Drehschwingungsdämpfer nach einem der vorhergehenden Ansprüche, **dadurch gekennzeichnet, dass** die Federschenkel (6) umfangsnah an den beiden gegeneinander verdrehbaren Elementen (3) des Drehschwingunsdämpfers (1) angreifen.

9. Drehschwingungsdämpfer nach einem der vorhergehenden Ansprüche, **dadurch gekennzeichnet, dass** das/die Federelemente (4) fliegend gelagert sind.

10. Drehschwingungsdämpfer nach einem der vorhergehenden Ansprüche, **dadurch gekennzeichnet, dass** die beiden gegeneinander verdrehbaren Elemente (3) für jeden Federschenkel (6) des mindestens einen Federelements (4) ein Widerlager (8) an einander zugewandten oder einander abgewandten Seiten der Federschenkel (6) aufweisen.

## Claims

1. Torsional vibration damper, comprising two elements (8) that can rotate about a common axis of rotation (2) and can be rotated relative to each other, having at least one spring element (4) which supports the two elements (8) elastically against rotation relative to each other, **characterized in that** the spring element (4) has two spring coils (5) arranged one behind each other, from which spring legs (6) project, two spring legs (6) of the two spring coils (5) being connected to each other and acting on one of the rotatable elements (3) of the torsional vibration damper (1), and two other spring legs (6) of the two spring coils (5) acting on the other rotatable element (3).

2. Torsional vibration damper according to Claim 1, **characterized in that** the spring legs (6) project beyond a circumferential surface of the spring coils (5) .

3. Torsional vibration damper according to Claim 1 or 2, **characterized in that** spring legs (6) at ends of the spring coils (5) that are remote from each other are connected to each other.

4. Torsional vibration damper according to one of Claims 1 to 3, **characterized in that** the two other spring legs (6) have a two-dimensional course in a tangential plane of the spring coils (5).

5. Torsional vibration damper according to one of the preceding claims, **characterized in that** the two spring coils (5) are wound in opposite directions.

6. Torsional vibration damper according to one of the preceding claims, **characterized in that** the spring element (4) has a polygonal, oval or elliptical coil and leg cross section.

7. Torsional vibration damper according to one of the preceding claims, **characterized in that** the torsional vibration damper (1) has a plurality of spring elements (4), the spring coils (5) of which are arranged outside the axis of rotation (2) of the torsional vibration damper (1).

8. Torsional vibration damper according to one of the preceding claims, **characterized in that** the spring legs (6) act close to the circumference of the two mutually rotatable elements (3) of the torsional vibration damper (1).

9. Torsional vibration damper according to one of the preceding claims, **characterized in that** the spring element/s is/are cantilevered.

10. Torsional vibration damper according to one of the preceding claims, **characterized in that** the two mutually rotatable elements (3) have an abutment (8) for each spring leg (6) of the at least one spring element (4) on sides of the spring legs (6) that face each other or face away from each other.

## Revendications

1. Amortisseur de vibrations torsionnelles comprenant deux éléments (8) pouvant tourner autour d'un même axe de rotation (2) et pouvant pivoter l'un par rapport à l'autre, et au moins un élément ressort (4) qui soumet les deux éléments (8) à une contrainte élastique contre un pivotement de l'un par rapport à l'autre, **caractérisé en ce que** l'élément ressort (4) comprend deux enroulements de ressort (5) disposés l'un derrière l'autre, desquels saillent des branches de ressort (6), deux branches de ressort (6) des deux enroulements de ressort (5) étant reliées et s'engageant sur l'un des éléments pouvant pivoter (3) de l'amortisseur de vibrations torsionnelles (1), et deux autres branches de ressort (6) des deux enroulements de ressort (5) s'engageant sur l'autre élément pouvant pivoter (3).

2. Amortisseur de vibrations torsionnelles selon la revendication 1, **caractérisé en ce que** les branches de ressort (6) dépassent d'une surface d'enveloppe des enroulements de ressort (5).

3. Amortisseur de vibrations torsionnelles selon la revendication 1 ou 2, **caractérisé en ce que** des branches de ressort (6) sont reliées ensemble à des extrémités des enroulements de ressort (5) qui sont éloignées entre elles.

4. Amortisseur de vibrations torsionnelles selon l'une des revendications 1 à 3, **caractérisé en ce que** les deux autres branches de ressort (6) ont un tracé bidimensionnel dans un plan tangentiel des enroulements de ressort (5).

5. Amortisseur de vibrations torsionnelles selon l'une des revendications précédentes, **caractérisé en ce que** les deux enroulements de ressort (5) sont enroulés dans des sens opposés.

6. Amortisseur de vibrations torsionnelles selon l'une des revendications précédentes, **caractérisé en ce que** l'élément ressort (4) présente une section transversale d'enroulement et de branche polygonale, ovale ou elliptique.

7. Amortisseur de vibrations torsionnelles selon l'une des revendications précédentes, **caractérisé en ce que** l'amortisseur de vibrations torsionnelles (1) présente plusieurs éléments ressort (4) dont les enroulements de ressort (5) sont disposés hors de l'axe de rotation (2) de l'amortisseur de vibrations torsionnelles (1).

8. Amortisseur de vibrations torsionnelles selon l'une des revendications précédentes, **caractérisé en ce que** les branches de ressort (6) s'engagent à proximité de la circonférence sur les deux éléments (3) de l'amortisseur de vibrations torsionnelles (1) pouvant pivoter l'un par rapport à l'autre.

9. Amortisseur de vibrations torsionnelles selon l'une des revendications précédentes, **caractérisé en ce que** le ou les éléments ressort (4) sont logés volants.

10. Amortisseur de vibrations torsionnelles selon l'une des revendications précédentes, **caractérisé en ce que** les deux éléments (3) qui peuvent pivoter l'un par rapport à l'autre présentent, pour chaque branche de ressort (6) de l'au moins un élément ressort (4), une butée (8) sur les côtés des branches de ressort (6) qui se font face ou qui sont éloignées l'une de l'autre.
